(19) Europäisches Patentamt / European Patent Office / Office européen des brevets

(11) **EP 0 793 369 B1**

(12) **EUROPEAN PATENT SPECIFICATION**

(45) Date of publication and mention
of the grant of the patent:
**20.06.2007 Bulletin 2007/25**

(51) Int Cl.:
*H04L 25/03* $^{(2006.01)}$     *H04L 27/26* $^{(2006.01)}$

(21) Application number: **96117528.8**

(22) Date of filing: **31.10.1996**

(54) **Method for automatically obtaining, in closed form, the coefficients of an equalizing network in a system of data transmission of Orthogonal Frequency Division Multiplexing (OFDM) type**

Verfahren zur automatischen Erzeugung, in geschlossener Form, der Koeffizienten eines Entzerrungsnetzwerkes in einem Datenübertragungssystem von OFDM-Art

Procédé d'acquisition automatique en forme fermée, des coefficients d'un réseau d'égalisation dans un système de transmission de données du type MDFO

(84) Designated Contracting States:
**DE ES FR GB IT NL PT**

(30) Priority: **03.11.1995 IT TO950889**

(43) Date of publication of application:
**03.09.1997 Bulletin 1997/36**

(73) Proprietor: **Tognetti, Dante**
**33170 Pordenone (IT)**

(72) Inventor: **Tognetti, Dante**
**33170 Pordenone (IT)**

(74) Representative: **Dini, Roberto**
**Metroconsult S.r.l.**
**Via Sestriere 100**
**10060 None (Torino) (IT)**

(56) References cited:
**EP-A- 0 613 266**

- **CARIOLARO G ET AL: "A COMPARISON BETWEEN TWO OFDM MODULATION SYSTEMS FOR DIGITAL TELEVISION BROADCASTING" PROCEEDINGS OF THE INTERNATIONAL WORKSHOP ON HDTV,NL,AMSTERDAM, ELSEVIER, vol. WORKSHOP 5, 1994, pages 279-288, XP000672260 ISBN: 0-444-81844-8**
- **JUKKA RINNE ET AL: "EQUALIZATION OF ORTHOGONAL FREQUENCY DIVISION MULTIPLEXING SIGNALS" PROCEEDINGS OF THE GLOBAL TELECOMMUNICATIONS CONFERENCE (GLOBECOM),US,NEW YORK, IEEE,1994, pages 415-419, XP000488584 ISBN: 0-7803-1821-8**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention refers to a method for the calculation of the interference coefficients in a data transmission system of the OFDM (Orthogonal Frequency Division Multiplexing) type with only the knowledge of the pulse response of the transmission channel.

It is known that a OFDM system transmits a block of data in a finite time T using N subcarriers equally spaced in frequency, on every of them being transmitted a symbol having a duration not greater than T, using a QAM (Quadrature Amplitude Modulation) system and a shaping pulse $g_T(t)$, where $g_T(t)=1$ for $0 \leq t \leq T$ and $g_T(t)=0$ elsewhere.

The signal, passing through the transmission channel is distorted and each symbol is affected by an interference, generally due both to the symbols of the same block, and to the symbols of the preceding blocks.

At the reception side, in order to reduce to a minimum the distortion, it is necessary to use equalisers of the DFE (Decision Feedback Equaliser) type wherein, as known, the interference coefficients are obtained using adaptive, very complicated and expensive methods.

"A description of such methods can be found in document D1 "A comparison between two OFDM modulation systems for digital broadcasting" by Cariolaro et al. ,Proceedings of the International Workshop on HDTV , NL, Amsterdam , Elsevier, Workshop 5, 1994, pp. 279-288.. In the document two OFDM equalized systems are considered, the first one without pulse shaping, and the other with a pulse shaping of the square root raised cosine type with a roll-off factor indicated as a (which corresponds to roll-off factor $\gamma$ in the patent) . Furthermore two different channel models are examined: a Ricean fading channel with 40 echoes, a bandwith of 8MHz with a given frequency response N(f); and a second channel of Single Frequency Network type where a longer echo has been added. It can be seen that a very large number of complex multiplications is needed."

Aim of the present invention is to indicate a method for determining the interference coefficients, which only needs the knowledge of the pulse response of the channel and allows to obtain equalisers showing very simple and cheap structures.

In order to reach the said aim the present invention has as its subject a method for determining the interference coefficients showing the features which are indicated in the first claim.

Further characteristics and advantages of the present invention will be clear from the following description and from the attached drawings, which are given only as an indicative and not limiting example.

In the drawings:

- figure 1 shows the simplified block diagram of an OFDM system without channel distortion;
- figure 2 shows the time behaviours of the pulses of the data in transmission and in reception;
- figure 3 shows the block diagram of a known DFE equaliser;
- figure 4 shows the block diagram of the transmitter and of the receiver of data according to the invention;
- figure 5 shows in detail the receiver according to the invention.

In order to facilitate the reading, in the following the symbols and the terms used are listed.

| | |
|---|---|
| $\Delta f$ | distance between two subcarriers; |
| $f_P$ | R.F. carrier; |
| $T_o = 1/\Delta f$ | time interval between two subcarriers; |
| T | duration of a data block; |
| $B = N \Delta f$ | total band of the modulated signal; |
| $T_G = T - T_o$ | guard interval between consecutive blocks; |
| $g_T(t)$ | data shaping pulse in transmission of duration T; |
| $g_R(t)$ | data shaping pulse in reception of duration $T_o$. |

The symbol * used as an index means 'conjugated complex',
used as an operator between two functions means 'convolution'.

Indicating with $c_n = a_n + jb_n$ the constellation point associated to the symbol having position n, to each block corresponds the following pulse signal modulated on a carrier frequency $f_P$:

$$x(t) = g_T(t)\left[\sum_{n=0}^{N-1} a_n \cos(2\pi f'_n t) - b_n \sin(2\pi f'_n t)\right] \quad 1)$$

with $f'_n = f_p + f_n$ \qquad $f_n = (n-N/2)\Delta f$

The complex envelope of 1) is given by

$$\underline{x}(t) = e^{-j2\pi N/2\Delta ft} \sum_{n=0}^{N-1} c_n \, g_T(t) \, e^{j2\pi n\Delta ft} = \sum_{n=0}^{N-1} c_n \, \varphi_n(t) \quad 2)$$

wherein:

$$\varphi_n(t) = g_T(t) \, e^{j2\pi(n-N/2)\Delta ft}$$

In order that the symbols can be recovered at reception side, it is necessary that the family $\varphi_n(t)$, where n=0,..., N-1, is orthogonal, or, more generally, it is advisable that a family exists $\Psi_k(t)$, where k=0,...,N-1, so that

$$\int_0^T \varphi_n(t) \, \psi^*_k(t) \, dt = \int_{-\infty}^{\infty} \Phi(f) \Psi^*(f) \, df = \begin{cases} 1 & \text{if } 0 \le n, k \le N-1, n=k \\ 0 & \text{if } 0 \le n, k \le N-1, n \ne k \end{cases} \quad 3)$$

(here and in the following two functions indicated with a small letter and the corresponding capital are intended as connected by a Fourier transform)

In the said assumption in fact it results that the value of a symbol received in a position m is given by the interrelation between $\underline{x}(t)$ and $\Psi_m(t)$; in fact from the 3) we obtain:

$$\int_0^T \underline{x}(t) \, \psi^*_m(t) \, dt = \sum_{n=0}^{N-1} c_n \int_0^T \varphi_n(t) \, \psi^*_m(t) \, dt = c_m \quad 3')$$

and if:

$$\psi_n(t) = g_R(t) \, e^{j2\pi(n-N/2)\Delta ft} \quad 3'')$$

the preceding orthogonality condition becomes:

$$\int_0^T g_T(t) \, g_R(t) \, e^{j2\pi(n-k)D ft} \, dt = \begin{cases} 1 & \text{if } 0 \le n = k \le N-1 \\ 0 & \text{elsewhere} \end{cases}$$

In order to evaluate the band occupied by the complex envelope of the signal of a block, it is necessary to calculate the Fourier transform of the 2):

$$\underline{X}(f) = F\left[\underline{x}(t)\right] = \sum_{k=0}^{N-1} c_k\, G_T\, (f - k\Delta f + N/2\Delta f) \qquad\qquad 4)$$

The band occupation is therefore N times that of the transmission data pulse $G_T$ (f), and as the latter in praxis is equal to S times $\Delta f$, where S equal to a few units, it is possible to maintain the band of $\underline{x}(t)$ within a value which is equal to $N\Delta f$ if the first and the last S symbols of the block are null, i.e. if the relevant carriers are suppressed. With this assumption, which has been considered valid in the following, we may assume that the total band of $\underline{x}(t)$ is given by $B=N\Delta f$, and therefore $\underline{x}(t)$ is described by its samples taken at distances $1/N\Delta f$:

$$\underline{X}_m = \underline{x}(t - m/N\Delta f)$$

and, with a few calculations, we obtain:

$$\underline{X}_m = \sum_{n=S}^{N-S} c_n\, W_N^{mn} \qquad\qquad 5)$$

As can be seen the said samples are substantially given by the IDFT of the sequence $(c_0 .... c_{N-1})$ periodic with period N.
In particular, each sample of $\underline{x}(t)$ is represented by a term of the sequence multiplied by the corresponding sample of the transmission data pulse (taken with alternation of the sign, which represents a frequency translation of $N\Delta f/2$, necessary for centring the spectrum around the origin) and is different from zero in the index interval from S to N-S.
Taking in account the Parseval theorem, the 3") and the orthogonality condition, through a few calculations we obtain:

$$c_m = \int_0^T \underline{x}(t)\, \psi^*(t)\, dt = \frac{1}{N\Delta f} \sum_{k=0}^{\infty} \underline{x}_k (-1)^k g_R\left(\frac{k}{N\Delta f}\right) e^{-j2\pi mk/N} \qquad\qquad 6)$$

From the 6) we see that, in case of a channel without transmission distortion, a generic transmitted symbol can be obtained from the DFT of the sequence of duration N, which in turn is obtained substantially adding samples of the received signal, alternately with changed sign, and multiplied by the corresponding samples of $g_R(t)$.

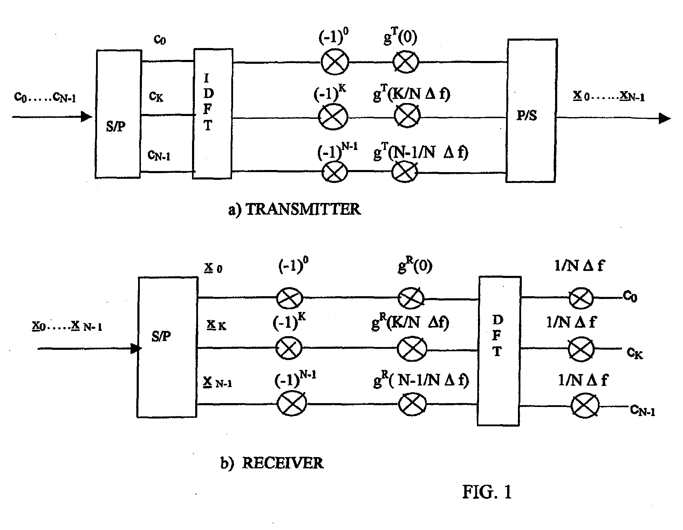

In figure 1 it is represented the synthesis of the transmitter and the receiver according to the 5) and 6). When the $\underline{x}(t)$ signal passes through a channel having the characteristic of a low-pass filter LP, the output is given by $\underline{y}(t) = \underline{x}(t) * \underline{h}(t)$, wherein $\underline{h}(t)$ is the pulse response of the filter, which we assume different from zero in the interval $(0 - T_h)$.
It is possible to demonstrate that the symbol $c_k$, on the basis of what said before, becomes at the reception side:

$$\wedge c_k = \sum_{n=S}^{N-S} c_n\, \Omega\, (k-n;n) \quad \text{with} \quad S \leq k \leq N-S \qquad\qquad 7)$$

$$g'(t;n) = \int_{\tau=0}^{T_h} \underline{h}(\tau)\, g_T(t-\tau)\, e^{-j2\pi(n-N/2)\Delta f\tau}\ d\tau =$$

$$= g_T(t) * (\underline{h}(t)\, e^{-j2\pi(n-N/2)\Delta ft})$$

and

$$\Omega(m,n) = \int_o^T g'_T(t,n)\, g_R(t)\, e^{-j2\pi m\Delta ft}\ dt \qquad m = k-n$$

we obtain

$$\Omega(0,n) \cong H(f_n) \qquad\qquad\qquad\qquad 7')$$

The 7) proves that in general a transformation LP on $\underline{x}(t)$ gives at the reception side a cosymbolic interference, i.e. the k-th symbol depends on the symbols of the same block and on their distance from the considered symbol.

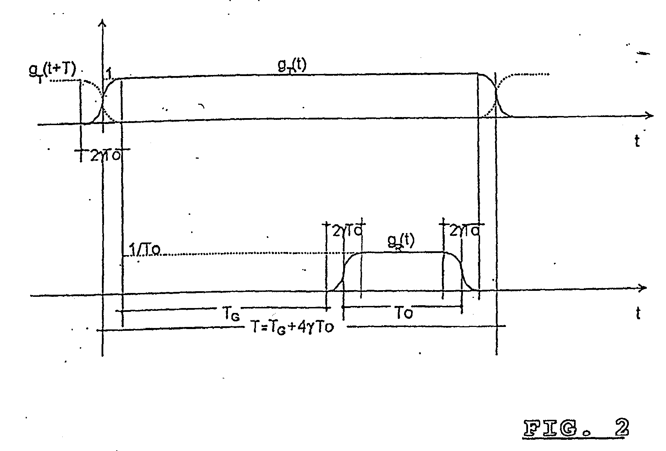

Let's consider the case of a traditional OFDM wherein (see fig. 2) $g_T(t)$ and $g_R(t)$ show the classic raised cosine behaviour and putting, for the sake of orthogonality,

$$g_T(t) = 1 \qquad\text{if}\qquad 0 \leq t \leq T$$

$$g_R(t) = 1/T_o \qquad\text{if}\qquad T_G \leq t \leq T$$

and, if $T_G \geq T_h$, from the previous formulas we obtain

$$^{\wedge}C_k = \sum_{n=S}^{N-S} c_n\, \underline{H}(f_n)\, \delta(k-n) \qquad\text{that is } C_k = c_k\, \underline{H}(f_k) \qquad\qquad 8)$$

where $\delta(m)=$ Kronecker pulse.

From the 8) we see that, if the guard interval $T_G$ is greater than the duration $T_h$ of the pulse response of the channel, the symbol received in the k position is equal to that transmitted, multiplied by the value of the transfer function in correspondence of the carrier $f_k$, without any cosymbolic interference.

This result is however no more valid if the duration of the pulse response is longer than the guard interval; assuming e.g. that the pulse response is represented by an echo, delayed by D, where $D > T_G$, we obtain

$$h(t) = \delta(t) + \underline{a}\, \delta(t-D)$$

where $\underline{a}=$ echo attenuation: and putting

$$\alpha_n = a\, e^{-j2\pi(n-N/2)\Delta fD}$$
$$T = T_G + T_O$$

$$\xi(m) = \int_0^T g_T(t-D)g_R(t)e^{-j2\pi m\Delta ft}dt = \left[G_T(f)e^{-j2\pi fD}\right]*G_R(f)\big|_{f=m\Delta f}$$

we obtain

$$\wedge C_k = \sum_{n=S}^{N-S} c_n \left[\delta(m)+\alpha_n\xi(m)\right] \qquad m=k-n \qquad\qquad 9)$$

From the 9) we can see that a symbol at a distance m from that interfered shows an interference coefficient which depends on the distance and on the position of the interfering symbol.

The 7) can be written

$$\wedge C_k = \sum_{m=k-(N-1)}^{k} c_{k-m}\, \Omega(m;k-m) = \Omega(0,k)\left[c_k + \sum_{m\neq 0} c_{k-m}\eta(m,k)\right]$$

where

$$\eta(m,k) = \frac{\Omega(m;k-m)}{\Omega(0,k)} = \text{ICI coefficients (of cosymbolic interference)}$$

In the real case, assuming that the duration of the pulse response is not greater than the duration T of the block, receiving a block we shall only take in account the previous block, as it is clear from fig. 2.

In fact, if $T_h<T$, the symbols of a block may at the most trespass into the next block mixing with the symbols of the latter.

If we indicate with [c'n...c'N-1] the sequence of the previous block and with

$$\underline{x}'(t) = \sum c'_n\, \varphi_n(t+T) = e^{-j2\pi N/2\Delta f(t+T)}g_T(t+T) \sum_{n=o}^{N-1} c'_n e^{j2\pi\Delta f(t+T)}$$

the relevant complex envelope, we obtain the general expression of the k-th symbol at the reception side

$$\wedge C_k = \sum_{n=o}^{N-1} c_n\, \Omega(k-n;n) + \sum_{n=o}^{N-1} c'_n\, \Omega'(k-n;n) \qquad\qquad 10)$$

where

$$\Omega'(m,n) = e^{j2\pi fnT} \int_0^T g''_T(t,n)\, g_R(t)\, e^{-j2\pi m\Delta ft}\, dt$$

$$g''_T(t,n) = \int h(\tau)\, g_T(t+T-\tau)\, e^{-j2\pi fn\tau}\, d\tau$$

In a similar way to what we see before, the 10) can be written

$$^\wedge C_k = \Omega(0,k)\left[c_k + \sum_{m\neq 0} c_{k-m}\,\eta(m;k) + \sum_m c_{k-m}\,\eta'(m;k)\right] \qquad 10')$$

$$\eta'(m,k) = \frac{\Omega'(m;k-m)}{\Omega(0,k)} = \text{ISI coefficients (of intersymbolic interference),}$$

depending on the symbols of the previous block.

It is possible to demonstrate that

$$\Omega'(m,n) = e^{j2\pi fnT} H(f)\,\delta(m) - e^{j2\pi fnT}\Omega(m,n)$$

$$\eta'(m,k) = \begin{cases} e^{j2\pi f_k T}\left[\frac{H(fk)}{\Omega(0,k)} - 1\right] & \text{if } m=0 \\ -e^{j2\pi f_{k-m}T} & \text{if } m\neq 0 \end{cases} \qquad 11)$$

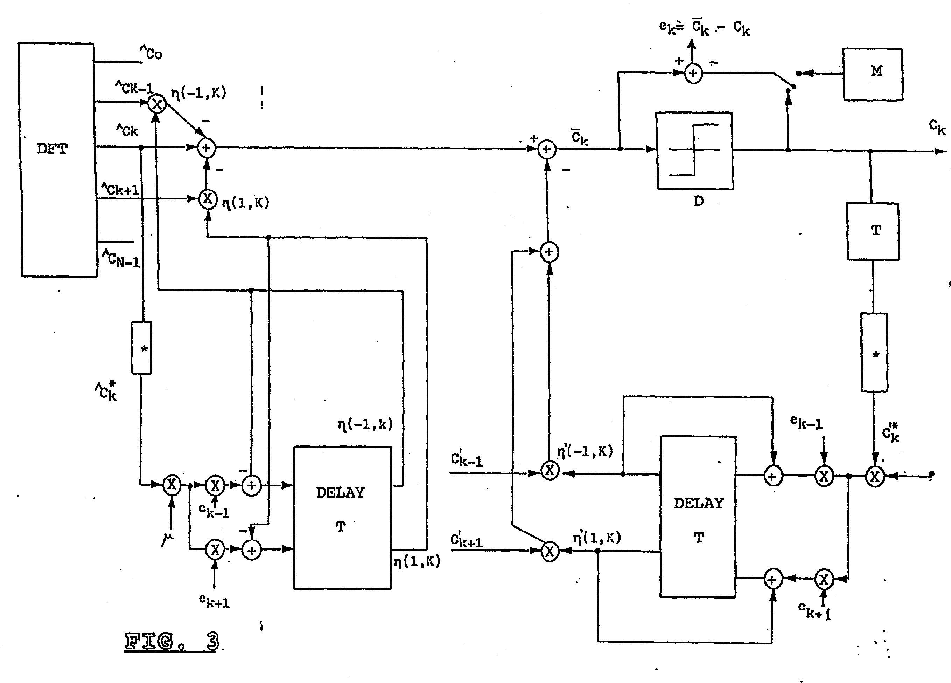

In order to eliminate the ICI and ISI interferences it is necessary to use at the output of the DFT an equaliser, e.g. of the DFE (Decision Feedback Equaliser) type, which means a quite complicated structure, which is shown in fig. 3, wherein we have assumed $\eta'(0,k)=0$, due to the 7').

The said equaliser shows a "feedforward" part (left side) which defines the $h(m,k)$ coefficients in order to minimise the ICI and a "feedback" part (right side) wherein the $h'(m,k)$ coefficients are calculated in order to minimise the ISI.

The D block represents the decisional element which assigns to each estimated symbol $\bar{c}_k$ the nearest position $c_k$ in the constellation.

$e_k = \bar{c}_k - c_k$ represents the symbol error: Usually after 15-20 blocks a known block is transmitted, whose symbols are memorised in the memory M of the receiver; $e_k$ is periodically "refreshed" with real and not with estimated values.

The $\eta$ coefficients are calculated using the LMS (Least Mean Square) algorithm:

$$\eta_{m,k}(t+T) = \eta_{m,k}(t) - \mu\,{}^\wedge C_k^*(t)\, e_k(t)$$

$$\eta'_{m,k}(t+T) = \eta'_{m,k}(t) + \mu c'_k{}^* e_k(t)$$

where

$\mu$ = adaptation parameter
$t + T$ indicates the next block to the current block.

In the fig. 3 there is shown the equalisation of the K-th symbol assuming that the interference is due only to the two adjacent symbols.

Of course the pattern must be repeated for each of the N symbols so that it is evident the complexity of the known equalisation systems, which must use a high number of adders, multipliers and memories (delays).

Coming back to the already seen case of a channel whose pulse response shows only one echo (but the results, correctly evaluated, have a general validity) having an attenuation $\underline{a}$ and a delay D.

The pulse response is:

$$\underline{h}(t) = \delta(t) + \underline{a}\,\delta(t\text{-}D)$$

and therefore

$$g'(t,n) = g_T(t) + \underline{a}\,g_T(t\text{-}D)\,e^{\text{-}j2\pi f_n D}$$

$$\Omega(m,n) = \delta(m) + \underline{a}\,e^{\text{-}j2\pi f_n D}\,\xi(m) \qquad\qquad 12)$$

$$\eta(m,k) = \frac{\delta(m) + \alpha_{k\text{-}m}\,e^{\text{-}j2\pi\Delta f D}\xi(m)}{1 + \alpha_k\xi(0)}$$

where

$$\alpha_k = \underline{a}\,e^{\text{-}j2\pi f_k D} \qquad\qquad \xi(m) = \int_0^T g_T(t\text{-}D)\,g_R(t)\,e^{\text{-}j2\pi m\Delta f t}\,dt$$

The calculation of the interference coefficients needs therefore only the knowledge of the $\xi(m)$ coefficients.

If $D \leq T_G$ the product $g_T(t\text{-}D)\,g_R(t)$ is a raised cosine function whose amplitude is $1/T_O$, whose duration is $T_o$ and which is centred at $T_C = T_G + T_O/2$; indicating with $G_{T\Delta(f)}$ the Fourier transform of such a function having a duration $T_\Delta$ and centred at the origin, we obtain: ..

$$G_{T\Delta}(f) = \frac{T_\Delta}{T_o} \cdot \frac{\sin(\pi f T_\Delta)}{\pi f T_\Delta} \cdot \frac{\cos(\gamma\pi f T_\Delta)}{1\text{-}4(\gamma f T_\Delta)^2}$$

In the case of $D > T_G$, the said product shows a Fourier transform which cannot be expressed in a simple way in closed form; however, if $D \geq T_G + 2\gamma T_o$, then the product is still a raised cosine function having amplitude $1/T_o$, but a duration $T_\Delta = T + 2\gamma T_o - D$ and centred at $T_c = (T - 2g\,T_o + D)/2$; in this case the coefficients $\xi(m)$

$$\xi(m) = G_{T\Delta}(m\Delta f)\,e^{\text{-}j2\pi m\Delta f T_c}$$

and, more explicitly

$$\xi(m) = \frac{1}{j2\pi m}\,\frac{\cos(\gamma\pi m\Delta f T_\Delta)}{1\text{-}4(\gamma m\Delta f T_\Delta)^2}\,[e^{j2\pi\Delta f T_\Delta} -1]\,e^{\text{-}j2\pi m\Delta f(T_c\text{-}2\gamma T_o)} \quad 13)$$

The expression 13) is important because it allows, through the 11) and the 12), to obtain in analytic way (i.e. without an adaptive procedure) the interference coefficients starting only from the knowledge of the pulse response of the channel. The latter can be estimated quite easily providing to build up once a data block to be transmitted as a Kronecker pulse and considering the received signal as representing the pulse response of the channel.

Knowing the interference coefficients and writing the 10') as follows

$$c_k = {}^{\wedge}C_k \frac{1}{\Omega(0,k)} - \sum_{m \neq o} c_{k-m}\, \eta(m,k) - \sum_{m} c'_{k-m}\, \eta'(m,k)$$

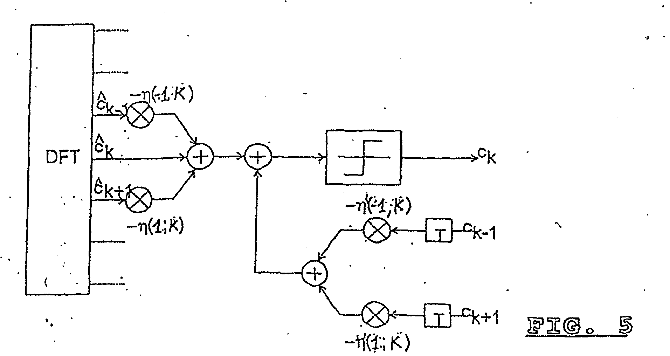

the equaliser structure may be of the type shown in fig. 5, where in a similar way to what has been done in figure 3, only the coefficients relating to the symbols adjacent to the K-th are considered significant, and, for the sake of causality, in the FIR part the received symbols have been considered as an approximation of those equalised. Comparing the diagrams of figures 3) and 5) it appears clear how much the invention is advantageous in terms of simplification and, as a consequence, of cost.

For a better understanding of the invention, some further indications are provided.

The invention can be applied if the following assumptions are met:

- the transmission channel must be linear, i.e.$y(t) = x(t)*h(t)$, where $h(t)$ is the impulse response of the system; it is known that the Fourier transform of $h(t)$ is the transfer function of the channel; the impulse function in the analogue field is the known Dirac function or $\delta$ function $\delta(t)$; the Kronecker impulse is the equivalent in the digital field $\delta(n) = 1$ for $n = 0$ and $\delta(n) = 0$ for $n \neq 0$.
- the transmission channel must be of the FIR (Finite Impulse Response) type, i.e. the response to the Kronecker impulse must be limited in time (limited number of echoes).
- the distortion of the channel is represented by an echo delayed by D and attenuated by $\underline{a}$. Therefore if at the input (transmission side) we have e. g. $d(t)$, at the output (reception side) we have $h(t) = d(t) + \underline{a}\, d(t-D)$, or, in digital notation, $h(m) = d(m) + \underline{a}\, d(m-k)$.

Conclusions are valid also in the general case (multiple echoes).

It is however necessary that D<T in order to limit the considerations to two contiguous blocks.

The invention starts from equations 11), 12) and 13), wherefore it is clear that the coefficients h and 'h, which up to now are obtained through an adaptive procedure, as in fig. 3, become known, if $\underline{a}$ and D are known, i.e. attenuation and delay at the reception side.

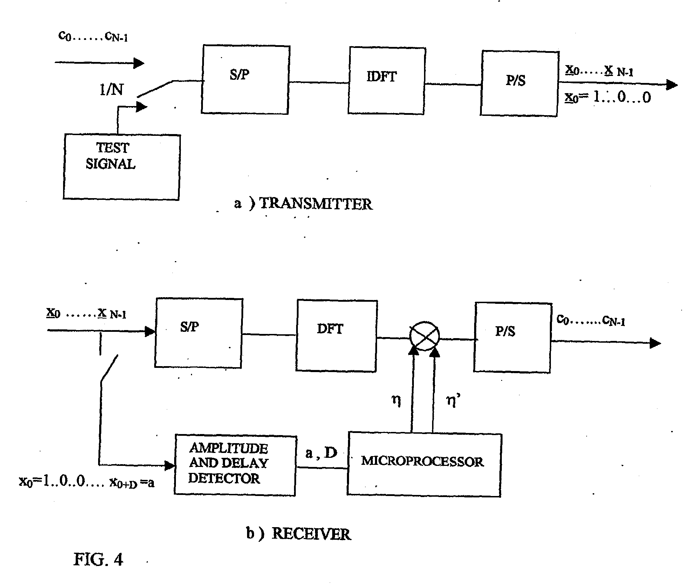

Practically we shall proceed as indicated in the block diagram of figure 4:

Within a determined time interval T (which is periodically repeated, in order to take in account possible variations of the channel response), $\underline{x}_n$, all null but one, are sent, i.e. the channel is tested using the Kronecker function.

This can be obtained, for instance, using a block of $c_n = 1/N$ so that, from the 5), we obtain $\underline{x}_o$=1 (not considering the constant) and all other $\underline{x}$=0.

If we want to have $\underline{x}_k$=1 it must be $c_n = 1/N\, e^{-j2\pi nk/N}$.

At the reception side there are present only $\underline{x}_k$ and $\underline{x}_{k+D}$, i.e. the impulse and its echo, delayed by D and attenuated by $\underline{a}$, where D and $\underline{a}$ are easily measurable.

By means of a microprocessor, usually available in the system for executing other functions, formulas 11) 12) and 13) are processed once in order to get the coefficients $\eta$(ICI) and $\eta'$(ISI). It is no more necessary any special circuitry, as it is clear from fig. 4.

The equaliser's structure can be of the type shown in detail in fig. 5, where, in a similar way to what has been done in figure 3, only the coefficients relating to the symbols adjacent to the k-th are considered significant, and, for the sake of causality, in the FIR part the received symbols have been considered as an approximation of those equalised.

We may summarise that, if the distortion of the channel is represented by one or more attenuated echoes, which is the most frequent case, equations 11), 12) and 13), allow to determine the ICI and ISI coefficients having the knowledge of the attenuation and the delay. The quickest way to know them is to transmit a single impulse (Kronecker) and measure the received signal.

From the above description the characteristics of the method according to the present invention will be clear, as clear are also the advantages thereof.

In particular the method according to the invention allows, in respect of the known methods, a simplification of the necessary apparatuses and therefore a cost reduction, as it is evident comparing figure 3 and figure 5.

**Claims**

**1.** Method for obtaining the coefficients of an equalizing network in a data transmission system of Orthogonal Frequency Division Multiplexing type herein after referred to as OFDM with a predetermined guard interval $T_G$, transmitted through a distorting channel having a maximal delay which is longer than said guard interval, in which at the transmission side an impulse signal is sent through the system, **characterized by** the following steps:

- at the reception side the echo of said transmitted impulse signal is detected and the delay D end attenuation $\underline{a}$ thereof are measured;
- the cosymbol interference coefficients $\eta$ and the intersymbol interference coefficients $\eta'$ are calculated once, without any adaptive procedure, by means of the formulas

$$\xi(m) = \frac{1}{j2\pi m} \cdot \frac{\cos(\gamma\pi\Delta f T_\Delta)}{1-4(\gamma m\Delta f T_\Delta)^2} [e^{j2\pi\Delta f T_\Delta} -1] e^{-j2\pi m\Delta f(T_c-2\gamma T_o)}$$

$$\Omega(m,n) = \delta(m) + \underline{a}\, e^{-j2\pi f_n D} \xi(m)$$

$$\eta(m,k) = \frac{\delta(m) + \underline{\alpha}_{k-m} e^{j2\pi\Delta f D} \xi(m)}{1+\underline{\alpha}_k \xi(0)}$$

$$\eta'(m,k) \simeq \begin{cases} e^{j2\pi f_k T} \dfrac{[H(f_k) -1]}{\Omega(0,k)} & \text{if } m=0 \\[2em] -e^{-j2\pi f_{k-m} T} \eta(m,k) & \text{if } m\neq 0 \end{cases}$$

wherein

$\delta(m)$ is the Kronecker impulse
D is the delay of the echo the reception side
$\underline{a}$ is the attenuation of the echo at the reception side
$\gamma$ is the roll-off factor of the data shaping pulses at the transmission side and at the reception side, with a temporal behaviour of the raised cosine type

$$\underline{\alpha}_k = \underline{a}\, e^{-j2 f_k D}$$

$f_k$ is the carrier in the k-th position of the OFDM signal.
$H(f_k)$ is the frequency response of the transmission channel in correspondence of the carrier $f_k$
$T_0 = 1/\Delta f$ is the duration of the data shaping pulse at the reception side
T is the duration of the data shaping pulse at the transmission side
$T_G$ is the guard interval of the OFDM system

$$T_\Delta = T + 2\gamma T_0 - D$$

$$T_c = T_G + T_0/2$$

k ,n are indexes that indicate the position of a symbol in the OFDM signal
m=k-n
Δf is the frequency difference between two adjacent subcarriers.

2. Apparatus for the transmission of data comprising means adapted to perform the method of claim 1.

3. Apparatus for the reception of data comprising means adapted to perform the method of claim 1

**Patentansprüche**

1. Verfahren zum Erhalten der Koeffzienten eines Entzerrungsnetzwerks in einem Datenübertragungssystem vom Typ des orthogonalen Frequenzmultiplex (Orthogonal Frequency Division Multiplexing), nachfolgend als OFDM bezeichnet, mit einem vorbestimmten Schutzintervall $T_G$, übertragen über einen verzerrenden Kanal mit einer maximalen Verzögerung, die länger ist als das Schutzintervall, in dem auf der Sendeseite ein Impulssignal durch das System gesendet wird, **gekennzeichnet durch** die nachfolgenden Schritte:

   - auf der Empfangsseite wird das Echo des gesendeten Impulssignals erfasst und dessen Verzögerung D und Dämpfung a werden gemessen;
   - die Cosymbolinterferenzkoeffizienten η und die Intersymbolinterferenzkoeffizienten η' werden einmalig berechnet, ohne jegliche adaptive Prozedur, mittels der Formeln

$$\xi(m) = \frac{1}{j2\pi m} \cdot \frac{\cos(\gamma\pi\Delta f T_\Delta)}{1 - 4(\gamma m\Delta f T_\Delta)^2} \; [e^{j2\pi\Delta f T_\Delta} - 1]e^{-j2\pi m\Delta f(T_c - 2\gamma T_o)}$$

$$\Omega(m,n) = \delta(m) + \underline{a}e^{j2\pi f_n D}\xi(m)$$

$$\eta(mk) = \frac{\delta(m) + \underline{\alpha}_{k-m}e^{-j2\pi\Delta f D}\xi(m)}{1 + \underline{\alpha}_k\xi(0)}$$

$$\eta'(m,k) = \begin{cases} e^{j2\pi f_k T}[\dfrac{H(f_k)}{\Omega(0,k)} - 1] & \text{if } m=0 \\[2em] -e^{-j2\pi f_{k-m} T}\,\eta(m,k) & \text{if } m\neq 0 \end{cases}$$

wobei

   δ(m) der Kronecker-Impuls ist,
   D die Verzögerung des Echos auf der Empfangsseite ist
   a die Dämpfung des Echos auf der Empfangsseite ist
   γ der Roll-Off-Faktor des Datenformungsimpulses auf der Sendeseite und auf der
   Empfangsseite ist, mit einem Zeitverhalten vom überhöhten Kosinustyp (raised cosine type)

$$\underline{\alpha}_k = \underline{a}e^{-J2\pi f_k D}$$

$f_k$ der Träger and der k-ten Position des OFDM-Signals ist.
$H(f_k)$ ist die Frequenzantwort des Übertragungskanals in Bezug auf den Träger $f_k$
$T_0=1/\Delta f$ ist die Dauer des Datenformungsimpulses auf der Empfangsseite
T ist die Dauer des Datenformungsimpulses auf der Sendeseite
$T_G$ ist das Schutzintervall (guard interval) des OFDM-Systems

$$T_\Delta = T + 2\gamma T_0 - D$$

$$T_C = T_G + T_0 / 2$$

k, n sind indices, die die Position eines Symbols in dem OFDM-Signal angeben,
m=k-n
$\Delta f$ ist die Frequenzdifferenz zwischen zwei benachbarten Unterträgern.

2. Vorrichtung zur Übertragung von Daten mit einer Einrichtung ausgestaltet zum Durchführen des Verfahrens nach Anspruch 1.

3. Vorrichtung für den Empfang von Daten mit einer Einrichtung ausgestaltet zum Durchführen des Verfahrens nach Anspruch1.

**Revendications**

1. Procédé pour obtenir les coefficients d'un réseau d'égalisation dans un système de transmission de données du type OFDM ou multiplexage par répartition en fréquence orthogonale avec un intervalle de garde prédéterminé $T_G$ transmis sur un canal introduisant de la distorsion et présentant un retard maximal supérieur audit intervalle de garde, dans lequel, du côté de l'émission, un signal impulsionnel est envoyé à travers le système, **caractérisé par** les étapes suivantes :

- on détecte, du côté de la réception, l'écho dudit signal impulsionnel transmis et on mesure de retard D et l'atténuation Ω du signal ;
- on calcule une fois, sans aucune procédure de type adaptative, les coefficients d'interférences cosymboles η ainsi que les coefficients d'interférences intersymboles η' grâce aux formules :

$$\xi(m) = \frac{1}{j2\pi m} \cdot \frac{\cos(\gamma\pi\Delta fT_\Delta)}{1-4(\gamma m\Delta fT_\Delta)^2} \left[ e^{j2\pi\Delta fT_\Delta} - 1 \right] e^{-j2\pi m\Delta f(T_C - 2\gamma T_0)}$$

$$\Omega(m,n) = \delta(m) + \underline{a}\, e^{-j2\pi f_n D}\, \xi(m)$$

$$\eta(m,k) = \frac{\delta(m) + \underline{\alpha}_{k-m} e^{-j2\pi\Delta f D}\, \xi(m)}{1 + \underline{\alpha}_k\, \xi(0)}$$

$$\eta'(m,k) = \begin{cases} e^{j2\pi f_k T}\left[\dfrac{H(f_k)-1}{\Omega(0,k)}\right] & \text{if } m=0 \\ \\ -e^{-j2\pi f_{k-m} T}\,\eta(m,k) & \text{if } m\neq 0 \end{cases}$$

dans lesquelles

$\delta(m)$ est l'impulsion de Kronecker

$D$ est le retard de l'écho du côté de la réception

$\underline{a}$ est l'atténuation de l'écho du côté de la réception

$\gamma$ est le coefficient de retombé ou facteur de raideur des impulsions de mise en forme des données du côté de l'émission et du côté de la réception, avec un comportement dans le temps du type à cosinus surélevé

$$\underline{a}_k = \underline{a}\, e^{-j2 f_k D}$$

$f_k$ est la porteuse se trouvant dans la $k^{\text{ème}}$ position du signal OFDM

$H(f_k)$ est la réponse fréquentielle du canal de transmission en correspondance à la porteuse $f_k$

$T_o = 1/\Delta f$ est la durée de l'impulsion de mise en forme des données du côté de la réception

$T$ est la durée de l'impulsion de mise en forme des données du côté de l'émission

$T_G$ est l'intervalle de garde du système OFDM

$$T_\Delta = T + 2\gamma\, T_o - D$$

$$T_C = T_G + T_o/2$$

$k, n$ sont des indices indiquant la position d'un symbole dans le signal OFDM

$m = k - n$

$\Delta f$ est la différence de fréquence entre deux sous-porteuses adjacentes .

2. Dispositif pour la transmission de données comprenant des moyens adaptés pour réaliser le procédé selon la revendication 1.

3. Dispositif pour la réception de données comprenant des moyens adaptés pour réaliser le procédé de la revendication 1.

a) TRANSMITTER

b) RECEIVER

FIG. 1

FIG. 2

FIG. 3

$c_0 \ldots \ldots c_{N-1}$

1/N

S/P IDFT P/S $\underline{x}_0 \ldots . \underline{x}_{N-1}$

$\underline{x}_0 = 1 \ldots 0 \ldots 0$

TEST SIGNAL

a ) TRANSMITTER

$\underline{x}_0 \ldots \ldots \underline{x}_{N-1}$ S/P DFT P/S $c_0 \ldots \ldots c_{N-1}$

$\eta$ $\eta'$

AMPLITUDE AND DELAY DETECTOR a , D MICROPROCESSOR

$x_0 = 1 \ldots 0 \ldots 0 \ldots x_{0+D} = a$

b ) RECEIVER

FIG. 4

FIG. 5

**EP 0 793 369 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CARIOLARO et al.** Proceedings of the International Workshop on HDTV. Elsevier, 1994, vol. 5, 279-288